# EUROPÄISCHE PATENTSCHRIFT

(11) **EP 1 966 008 B1**
(45) Veröffentlichungstag und Bekanntmachung des Hinweises auf die Patenterteilung: **12.08.2015**
(21) Anmeldenummer: 06819817.5
(22) Anmeldetag: 28.11.2006
(51) Int. Cl.: B60R 16/023, B60R 25/00, G06F 9/445, H04L 12/00

(54) **VERFAHREN ZUR VERTEILUNG VON SOFTWAREMODULEN**
METHOD FOR DISTRIBUTING SOFTWARE MODULES
PROCEDE DE DISTRIBUTION DE MODULES LOGICIELS

(30) Priorität: 22.12.2005 DE 102005061393
(43) Veröffentlichungstag der Anmeldung: 10.09.2008
(73) Patentinhaber: ROBERT BOSCH GMBH, 70442 Stuttgart (DE)
(72) Erfinder: VON SCHWERTFUEHRER, Gerit, 74321 Bietigheim-Bissingen (DE); NIEMANN, Holger, 71634 Ludwigsburg (DE); HAGMAN, Per, 70469 Stuttgart (DE); DUBS, Alexander, 76646 Bruchsal (DE); GRESKAMP, Siegfried, 74189 Weinsberg (DE)
(86) Internationale Anmeldenummer: PCT/EP2006/068995
(87) Internationale Veröffentlichungsnummer: WO 2007/074009

(56) Entgegenhaltungen:
- EP-A- 1 455 312
- WO-A-02/10903
- JP-A- 5 257 908
- US-A- 5 720 024

## Beschreibung

Die Erfindung betrifft ein Verfahren zur Verteilung von Softwaremodulen, eine Einrichtung zur Verteilung von Softwaremodulen, ein Computerprogramm und ein Computerprogrammprodukt.

### Stand der Technik

Es gibt Bestrebungen, zukünftig eine freie Verteilung von Fahrzeugsteuergeräte-Software auf die im Fahrzeug vorhandenen Steuergeräte vornehmen zu können. Dabei sind insbesondere Sicherheitsaspekte zu berücksichtigen. Eine vollständig freie Verteilung von Softwaremodulen könnte in diesem Zusammenhang dazu führen, dass jedes Steuergerät, auf das die Softwaremodule verteilt werden sollen, die maximalen Sicherheitsanforderungen der zu verteilenden Softwaremodule erfüllen muss. Dabei besteht jedoch die Gefahr, dass sicherheitsrelevante Softwaremodule einem Steuergerät zugewiesen werden, das die Sicherheitsanforderungen dieser sicherheitsrelevanten Softwaremodule nicht erfüllt. Des weiteren ist denkbar, dass sicherheitsrelevante Softwaremodule nicht verteilt werden können. Dies würde eine Einschränkung der vorgesehenen Verteilung von Software bedeuten.

Die Druckschrift DE 102 19 501 A1 offenbart ein Beispiel eines Zusammenwirkens von Software- und Hardwaremodulen unter Berücksichtigung sicherheitskritischer Aspekte. Diese Druckschrift betrifft ein Verfahren zur Verbesserung von Fehlerbeherrschungsmaßnahmen, insbesondere bei Automatisierungssystemen, bestehend aus wenigstens einer Standard-CPU-Baugruppe mit integrierter Software, wenigstens einer fehlersicheren Peripheriebaugruppe und wenigstens einem Kommunikationskanäl zur Kommunikation zwischen der Standard-CPU-Baugruppe und der fehlersicheren Peripheriebaugruppe, wobei die Software der Standard-CPU- Baugruppe aus Betriebssystem und Anwenderprogramm besteht. Bei der Überprüfung auf Fehler in sicherheitskritischen Daten und/oder der Überprüfung auf Fehler bei der Verarbeitung von sicherheitskritischen Daten wird innerhalb der Standard- CPU-Baugruppe eine Kombination aus diversitärer und codierter Verarbeitung von Daten und/oder Operatoren verwendet.

Das Dokument EP-A-1455312 offenbart ein Verfahren und ein Einrichtung gemäß dem nächstliegenden Stand der Technik. Vor diesem Hintergrund wird ein Verfahren mit den Merkmalen des Patentanspruchs 1, eine Einrichtung mit den Merkmalen des Patentanspruchs 7, ein Computerprogramm mit den Merkmalen des Patentanspruchs 11 und ein Computerprogrammprodukt mit den Merkmalen des Patentanspruchs 12 vorgeschlagen.

### Vorteile der Erfindung

Bei dem erfindungsgemäßen Verfahren zur Verteilung von Softwaremodulen auf Steuergeräte werden den Steuergeräten die Softwaremodule unter Berücksichtigung von sicherheitsrelevanten Klassifizierungsmerkmalen zugeordnet.

Die erfindungsgemäße Einrichtung ist zur Verteilung von Softwaremodulen auf Steuergeräte ausgebildet. Es ist vorgesehen, dass diese erfindungsgemäße Einrichtung den Steuergeräten unter Berücksichtigung von sicherheitsrelevanten Klassifizierungsmerkmalen Softwaremodule zuordnet.

Weitere vorteilhafte Ausgestaltungen ergeben sich aus den abhängigen Patentansprüchen.

Die Erfindung betrifft außerdem ein Computerprogramm mit Programmcodemitteln, um alle Schritte eines erfindungsgemäßen Verfahrens durchzuführen, wenn das Computerprogramm auf einem Computer oder einer entsprechenden Recheneinheit, insbesondere einer erfindungsgemäßen Einrichtung, ausgeführt wird.

Die Erfindung betrifft auch ein Computerprogrammprodukt mit Programmcode-mitteln, die auf einem computerlesbaren Datenträger gespeichert sind, um alle Schritte eines erfindungsgemäßen Verfahrens durchzuführen, wenn das Computerprogramm auf einem Computer oder einer entsprechenden Recheneinheit, insbesondere einer erfindungsgemäßen Einrichtung, ausgeführt wird.

Mit der Erfindung ist eine Klassifizierung von Softwaremodule und somit von Software, die auf Steuergeräte verteilt werden sollen bzw. soll, möglich. Außerdem ist eine Klassifizierung der Steuergeräte bezüglich ihrer Sicherheitsrelevanz bzw. ihrer Sicherheitsanforderungen und eine Berücksichtigung dieser sicherheitsrelevanten Klassifizierungsmerkmale bei einem Prozess der Verteilung der Softwaremodule oder von Anteilen dieser Software realisierbar. Die Erfindung lässt demnach eine insbesondere gezielte Verteilung von sicherheitsrelevanten Softwaremodulen auf Steuergeräte eines Steuergeräteverbunds zu.

Dabei ist die Möglichkeit gegeben, Hardwarekosten in dem Steuergeräteverbund einzusparen, falls nicht jedes Steuergerät den gleichen Sicherheitsanforderungen unterliegt. Auf den verschiedenen Steuergeräten innerhalb des Steuergeräteverbunds, beispielsweise in einem Fahrzeug, können nach der Verteilung oder Zuordnung jeweils nur bestimmte Softwaremodule installiert werden. Des weiteren kann vermieden werden, dass sicherheitsrelevante Softwaremodule auf Steuergeräte, die nicht den Sicherheitsanforderungen entsprechen, verteilt werden.

Bei einer Ausgestaltung der Erfindung werden zunächst alle Softwaremodule, die auf den Steuergeräten verteilt werden sollen, anhand von sicherheitsrelevanten Klassifizierungsmerkmalen unterteilt. Ebenso werden die Steuergeräte, auf die die Softwaremodule verteilt werden sollen, anhand der gleichen, sicherheitsrelevanten Klassifizierungsmerkmale unterteilt. Somit werden die Softwaremodule und die Steuergeräte bzgl. einer Realisierung von Sicherheitsanforderungen nach denselben Aspekten klassifiziert und unterteilt. Die Klassifizierungsrnerkmale können gemäß gegebener Sicherheitsanforderungen standardisiert sein.

Bei der Verteilung der sicherheitsrelevanten Softwaremodule wird eine Zuteilung mindestens eines Softwaremoduls nur auf ein Steuergerät zugelassen, das mindestens die sicherheitsrelevanten Klassifizierungsmerkmale des sicherheitsrelevanten Softwaremoduls erfüllt. Werden derartige Klassifizierungsmerkmale nicht erfüllt, kann keine Zuteilung erfolgen.

Als sicherheitsrelevantes Klassifizierungsmerkmal könnte z.B. der Sicherheitsintegritätslevel (SIL) nach DIN EN 61508 herangezogen werden, der typischerweise in fünf Grade von SILO bis SIL4 aufgeteilt ist. So kann einem ersten Softwaremodul bzw. einer ersten Software-Funktion, beispielsweise für eine Lüftersteuerung, ein SIL von 0 und einem zweiten Softwaremodul bzw. einer zweiten Software-Funktion, das bzw. die zur Berechnung eines Fahrerwunschmoments aus einer Fahrpedalstellung ausgebildet ist, z.B. ein SIL von 3 zugeordnet werden.

Ein erstes Steuergerät ohne Hardware-Redundanz und Sicherheitskonzept darf nur Softwaremodule des Grades SILO aufnehmen, ein zweites Steuergerät mit einer Hardware-Redundanz, das z.B. zwei Prozessoren aufweist und mit einem Sicherheitskonzept ausgestattet ist, darf Software bis zum Grad SIL3 aufnehmen.

In diesem Beispiel müsste die zweite Software-Funktion auf das zweite Steuergerät aufgeteilt werden. Die erste Software-Funktion dürfte beiden Steuergeräten zugewiesen werden. Da das erste Steuergerät ohne Redundanz und Sicherheitskonzept auskommt, ist es kostengünstiger als das zweite Steuergerät.

Die Verteilung kann automatisiert ablaufen, ist jedoch auch manuell durchführbar und z.B. im Rahmen von verteilter Software, die in Softwaremodulen vorliegt und für Steuergeräte in Kraftfahrzeugen vorgesehen ist, einsetzbar.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

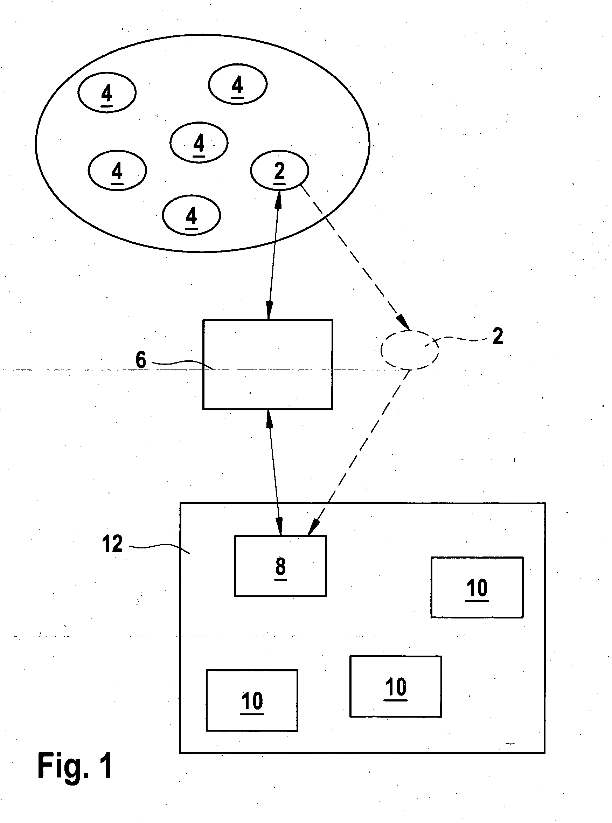

- Figur 1: zeigt in schematischer Darstellung ein Ausführungsbeispiel zur Verteilung von Softwaremodulen auf Steuergeräte.

In Figur 1 sind mehrere Softwaremodule 2, 4, eine Einrichtung 6 sowie mehrere Steuergeräte 8, 10 innerhalb eines Steuergeräteverbunds 12, beispielsweise in einem Fahrzeug oder eine elektromechanische Vorrichtung, schematisch dargestellt.

Es ist vorgesehen, dass die Softwaremodule 2, 4 unter Berücksichtigung von Sicherheitsanforderungen auf die Steuergeräte 8, 10 verteilt werden sollen. Dabei ist zu berücksichtigen, dass kein Softwaremodul 2, 4 einem Steuergerät 8, 10 zugewiesen wird, das dessen Sicherheitsanforderungen nicht erfüllt.

Die Einrichtung 6 ist dazu ausgebildet, den Steuergeräten 8, 10 unter Berücksichtigung von sicherheitsrelevanten Klassifizierungsmerkmalen Softwaremodule 2, 4 zuzuordnen. Dazu werden die Softwaremodule 2, 4 und die Steuergeräte 8, 10 durch die Einrichtung 6 klassifiziert und anhand der Klassifizierungsmerkmale unterteilt. Hierzu werden als Klassifizierungsmerkmale Sicherheitsintegritätslevel herangezogen. Es wird dabei durch die Einrichtung 6 überprüft, welche Klassifizierungsmerkmale jeweils ein Steuergerät 8, 10 erfüllt, so dass diesem Steuergerät 8, 10 in Abhängigkeit der erfüllten Klassifizierungsmerkmale entsprechende Softwaremodule 2, 4 zugeteilt werden.

In vorliegendem Ausführungsbeispiel werden durch die Einrichtung 6 ein erstes Softwaremodul 2 und ein erstes Steuergerät 8 klassifiziert und somit auf Erfüllung sicherheitsrelevanter Klassifizierungsmerkmale überprüft. Als Maßstab wird hierbei der in mehrere sicherheitsrelevante Grade oder Stufen unterteilte Sicherheitsintegritätslevel herangezogen. In diesem Fall genügt das erste Steuergerät 8 den Sicherheitsanforderungen des ersten Softwaremoduls 2, da der Sicherheitsintegritätslevel des ersten Steuergeräts 8 mindestens genauso groß wie der Sicherheitsintegritätslevel des ersten Softwaremoduls 2 ist. Das erste Softwaremodul 2 wird somit dem ersten Steuergerät 8 zugewiesen und auf diesem ersten Steuergerät 8 installiert.

Mit der vorliegenden Erfindung ist eine freie Verteilung von Softwaremodulen 2, 4 und somit Fahrzeugsteuergeräte-Software auf die in dem Fahrzeug vorhandenen Steuergeräte 8, 10 möglich. Dabei können nunmehr insbesondere Sicherheitsaspekte berücksichtigt werden. Es ist somit bei einer vollständig freien Verteilung von Softwaremodulen 2, 4 nicht mehr erforderlich, dass jedes Steuergerät 8, 10, auf das die Softwaremodule 2, 4 verteilt werden sollen, die maximalen Sicherheitsanforderungen der zu verteilenden Softwaremodule 2, 4 erfüllen muss.

Es besteht auch nicht mehr die Gefahr, dass sicherheitsrelevante Softwaremodule 2, 4 einem Steuergerät 8, 10 zugewiesen werden, das die Sicherheitsanforderungen dieser sicherheitsrelevanten Softwaremodule 2, 4 nicht erfüllt. Die Softwaremodule 2, 4 können nun unter Berücksichtigung der sicherheitsrelevanten Klassifizierungsmerkmale gezielt verteilt werden.

## Patentansprüche

1. Verfahren zur Verteilung von Softwaremodulen (2, 4) mit unterschiedlichen Sicherheitsanforderungen auf Steuergeräte (8, 10), die sich hinsichtlich der Erfüllung der Sicherheitsanforderungen unterscheiden, **dadurch gekennzeichnet, dass** den Steuergeräten (8, 10) die Softwaremodule (2, 4) unter Berücksichtigung von sicherheitsrelevanten Klassifizierungsmerkmalen zugeordnet werden.

2. Verfahren nach Anspruch 1, bei dem die Softwaremodule (2, 4) klassifiziert und anhand der Klassifizierungsmerkmale unterteilt werden.

3. Verfahren nach Anspruch 1 oder 2, bei dem die Steuergeräte (8, 10) klassifiziert und anhand der Klassifizierungsmerkmale unterteilt werden.

4. Verfahren nach einem der voranstehenden Ansprüche, bei dem überprüft wird, welche Klassifizierungsmerkmale jeweils ein Steuergerät (8, 10) erfüllt, so dass diesem Steuergerät (8, 10) in Abhängigkeit der erfüllten Klassifizierungsmerkmale mindestens ein Softwaremodul (2, 4) zugeteilt wird.

5. Verfahren nach einem der voranstehenden Ansprüche, bei dem als Klassifizierungsmerkmal Sicherheitsintegritätslevel herangezogen werden.

6. Verfahren nach einem der voranstehenden Ansprüche, das für Steuergeräte (8, 10) eines Fahrzeugs durchgeführt wird, wobei die Steuergeräte (8, 10) mittels der Softwaremodule (2, 4) Funktionen des Fahrzeugs, beispielsweise Steuerung eines Lüfters oder Berechnung eines Fahrerwunschmoments aus einer Fahrpedalstellung, realisieren.

7. Einrichtung, die zur Verteilung von Softwaremodulen (2, 4) auf Steuergeräte (8, 10) ausgebildet ist, **dadurch gekennzeichnet dass** die Einrichtung den Steuergeräten (8, 10) unter Berücksichtigung von sicherheitsrelevanten Klassifizierungsmerkmalen Softwaremodule (2, 4) zuordnet.

8. Einrichtung nach Anspruch 7, die dazu ausgebildet ist, Softwaremodule (2, 4) zu klassifizieren und anhand der Klassifizierungsmerkmale zu unterteilen.

9. Einrichtung nach Anspruch 7 oder 8, die dazu ausgebildet ist, Steuergeräte (8, 10) zu klassifizieren und anhand der Klassifizierungsmerkmale zu unterteilen.

10. Einrichtung nach einem der Ansprüche 7 bis 9, die dazu ausgebildet ist, zu überprüfen, welche Klassifizierungsmerkmale jeweils ein Steuergerät (8, 10) erfüllt, und diesem Steuergerät (8, 10) in Abhängigkeit der erfüllten Klassifizierungsmerkmale mindestens ein Softwaremodul (2, 4) zuzuteilen.

11. Computerprogramm mit Programmcodemitteln, um alle Schritte eines Verfahrens nach einem der Ansprüche 1 bis 6 durchzuführen, wenn das Computerprogramm auf einem Computer oder einer entsprechenden Recheneinheit, insbesondere einer Einrichtung (6) nach einem der Ansprüche 7 bis 10, ausgeführt wird.

12. Computerprogrammprodukt mit Programmcodemitteln, die auf einem computerlesbaren Datenträger gespeichert sind, um alle Schritte eines Verfahrens nach einem der Ansprüche 1 bis 6 durchzuführen, wenn das Computerprogramm auf einem Computer oder einer entsprechenden Recheneinheit, insbesondere einer Einrichtung (6) nach einem der Ansprüche 7 bis 10, ausgeführt wird.

## Claims

1. Method for distributing software modules (2, 4) with different safety requirements to control units (8, 10) which differ with regard to the satisfaction of the safety requirements, **characterized in that** the control units (8, 10) are assigned the software modules (2, 4) with the inclusion of safety-relevant classification features.

2. Method according to Claim 1, in which the software modules (2, 4) are classified and subdivided with the aid of the classification features.

3. Method according to Claim 1 or 2, in which the control units (8, 10) are classified and subdivided with the aid of the classification features.

4. Method according to one of the preceding claims, in which it is checked which classification features are respectively satisfied by a control unit (8, 10) so that this control unit (8, 10) is allocated at least one software module (2, 4) as a function of the satisfied classification features.

5. Method according to one of the preceding claims, in which safety integrity levels are used as classification feature.

6. Method according to one of the preceding claims, which is carried out for control units (8, 10) of a vehicle, the control units (8, 10) making use of the software modules (2, 4) in order to implement functions of the vehicle, for example controlling a fan, or calculating from an accelerator pedal position a driver's desired torque.

7. Device which is designed to distribute software modules (2, 4) to control units (8, 10), **characterized in that** the device assigns software modules (2, 4) to the control units (8, 10) with the inclusion of safety-relevant classification features.

8. Device according to Claim 7, which is designed to classify software modules (2, 4) and to subdivide them with the aid of the classification features.

9. Device according to Claim 7 or 8, which is designed to classify control units (8, 10) and to subdivide them with the aid of the classification features.

10. Device according to one of Claims 7 to 9, which is designed to check which classification features are respectively satisfied by a control unit (8, 10), and said control unit (8, 10) is allocated at least one software module (2, 4) as a function of the satisfied classification features.

11. Computer program with program code means for the purpose of carrying out all the steps of a method according to one of Claims 1 to 6 when the computer program is executed on a computer or an appropriate arithmetic logic unit, in particular a device (6) according to one of Claims 7 to 10.

12. Computer program product with program code means which are stored on a computer readable data carrier in order to carry out all the steps of a method according to one of Claims 1 to 6 when the computer program is executed on a computer or an appropriate arithmetic logic unit, in particular a device (6) according to one of Claims 7 to 10.

## Revendications

1. Procédé de distribution de modules logiciels (2, 4) comportant différentes exigences de sécurité sur des appareils de commande (8, 10) qui se différencient du point de vue du des exigences de sécurité, **caractérisé en ce que** les modules logiciels (2, 4) sont associés aux appareils de commande (8, 10) en tenant compte de caractéristiques de classification relevant de la sécurité.

2. Procédé selon la revendication 1, dans lequel les modules logiciels (2, 4) sont classés et répartis sur la base des caractéristiques de classification.

3. Procédé selon la revendication 1 ou 2, dans lequel les appareils de commande sont classés et sont répartis sur la base des caractéristiques de classification.

4. Procédé selon l'une quelconque des revendications précédentes, dans lequel on vérifie les caractéristiques de classification qu'un appareil de commande respectif (8, 10) respecte de manière à ce qu'au moins un module logiciel (2, 4) soit affecté audit appareil de commande (8, 10) en fonction des caractéristiques de classification respectées.

5. Procédé selon l'une quelconque des revendications précédentes, dans lequel des niveaux d'intégrité de sécurité sont utilisés en tant que caractéristique de classification.

6. Procédé selon l'une quelconque des revendications précédentes, qui est mis en oeuvre pour des appareils de commande (8, 10) d'un véhicule automobile, dans lequel les appareils de commande (8, 10) réalisent, au moyen des modules logiciels (2, 4), des fonctions du véhicule automobile, par exemple la commande d'un ventilateur ou le calcul d'un couple de consigne du conducteur à partir d'un réglage de pédale d'accélérateur.

7. Dispositif conçu pour distribuer des modules logiciels (2, 4) sur des appareils de commande (8, 10), **caractérisé en ce que** le dispositif associe des modules logiciels (2, 4) aux appareils de commande (8, 10) en tenant compte de caractéristiques de classification relevant de la sécurité.

8. Dispositif selon la revendication 7, conçu pour classer des modules logiciels (2, 4) et les répartir sur la base des caractéristiques de classification.

9. Dispositif selon l'une quelconque des revendications 7 ou 8, conçu pour classer des appareils de commande (8, 10) et les répartir sur la base des caractéristiques de classification.

10. Dispositif selon l'une quelconque des revendications 7 à 9, conçu pour vérifier les caractéristiques de classification respectées par un appareil de commande respectif (8, 10), et pour affecter audit appareil de commande (8, 10) au moins un module logiciel (2, 4) en fonction des caractéristiques de classification respectées.

11. Programme informatique comportant des moyens à code de programme destinés à mettre en oeuvre toutes les étapes d'un procédé selon l'une quelconque des revendications 1 à 6, lorsque le programme informatique est exécuté sur un ordinateur ou une unité de calcul correspondante, notamment un dispositif (6) selon l'une quelconque des revendications 7 à 10.

12. Produit de programme informatique comportant des moyens à code de programme qui sont stockés sur un support de données lisible par ordinateur afin de mettre en oeuvre toutes les étapes d'un procédé selon l'une quelconque des revendications 1 à 6, lorsque le programme informatique est exécuté sur un ordinateur ou une unité de calcul correspondante, notamment un dispositif (6) selon l'une quelconque des revendications 7 à 10.
